# FASCICULE DE BREVET EUROPEEN

(11) **EP 1 730 467 B1**
(45) Date de publication et mention de la délivrance du brevet: **16.07.2014**
(21) Numéro de dépôt: 04742331.4
(22) Date de dépôt: 24.03.2004
(51) Int. Cl.: G01B 11/16, G01D 5/353, E02D 1/00

(54) **PROCEDE POUR LOCALISER ET MESURER LES DEFORMATIONS D'UN OUVRAGE DE GENIE CIVIL**
VERFAHREN ZUR ORTUNG UND MESSUNG VON VERFORMUNGEN EINES BAUWERKS
METHOD FOR LOCATING AND MEASURING DEFORMATIONS IN A WORK OF CIVIL ENGINEERING

(43) Date de publication de la demande: 13.12.2006
(73) Titulaire: TENCATE GEOSYNTHETICS FRANCE, 95870 Bezons (FR); FIBER OPTIC SENSORS & SENSING SYSTEMS, 2440 Geel (BE)
(72) Inventeur: DELMAS, Philippe, F-78330 FONTENAY LE FLEURY (FR); NANCEY, Alain, F-95650 BOISSY L'AILLERIE (FR); VOET, Marc, B-2440 GEEL (BE); VLEKKEN, Johan, B-3590 DIEPENBEEK (BE); SCHOUBS, Els, B-3110 ROTSELAAR (BE)
(74) Mandataire: Cardy, Sophie Marie
(86) Numéro de dépôt international: PCT/FR2004/000721
(87) Numéro de publication internationale: WO 2005/103606

(56) Documents cités:
- WO-A-99/09370
- FR-A- 2 728 677
- FR-A- 2 844 874
- US-B1- 6 256 090

## Description

L'invention concerne un procédé pour localiser et mesurer les déformations d'un ouvrage de génie civil.

Lors des constructions des autoroutes ou des voies de chemin de fer, de nombreux travaux de génie civil sont réalisés afin de supporter l'infrastructure de la voie. Mais certains terrains comportent des cavités naturelles ou artificielles non répertoriées. Il peut alors se produire, au cours de la construction de la nouvelle voie, ou plus tard au cours de son exploitation, des effondrements imprévisibles de terrain qui peuvent provoquer des accidents graves, par suite de la surcharge de ces zones fragiles, des infiltrations d'eau, de la sécheresse et des trépidations.

Pour éviter ces accidents, il serait nécessaire de procéder à des sondages systématiques du terrain avant de réaliser les travaux de génie civil. Ces sondages sont effectivement réalisés dans les terrains normalement sujets à effondrement.

Toutefois, certains terrains, sans risque d'éboulement naturel, ont comporté, dans les temps anciens, des ouvrages militaires enterrés dont l'existence est aujourd'hui inconnue.

Les sondages systématiques coûtent très chers et de plus, ils doivent être effectués à faible distance l'un de l'autre, sous la voie projetée et aux abords de celle-ci, pour garantir une sécurité absolue.

En outre, même en cas d'absence de cavités dans le terrain, le sol peut subir des tassements non uniformes sous certaines zones de la voie par suite des successions de périodes humides et de période de sécheresse, qui peuvent entraîner un affaissement, certes limité en amplitude, mais préjudiciable à la sécurité notamment lorsqu'il s'agit d'une voie destinée au passage de trains à grande vitesse.

Afin de limiter les risques d'effondrement des remblais, il est courant de disposer sur le sol et dans les remblais des nappes ou bandes de géosynthétique tissé ou non tissé qui permettent de rigidifier le remblai, en cas d'affaissement du sol. Les fils du géosynthétique subissent alors des efforts considérables qui entraînent une déformation par allongement des fils et qui peuvent provoquer la rupture de ces derniers et l'effondrement du remblai.

Pour détecter des déformations, à seuils définis, d'un ouvrage de génie civil, FR 2 728 677 a proposé d'équiper le géosynthétique de fils parallèles susceptibles de transmettre des signaux et calibrés à des valeurs d'allongement de rupture prédéterminées. On mesure le seuil de déformation atteint en envoyant des signaux dans les fils et en détectant la présence ou l'absence de réponse à ces signaux.

Les fils peuvent être des fils électriques ou des fibres optiques. La mesure se fait par tout ou rien, et la localisation de la déformation à un seuil défini ne peut se faire qu'en disposant deux jeux de fils parallèles, disposés perpendiculairement l'un par rapport à l'autre.

Le but de l'invention est de proposer un procédé qui permette d'une part, de localiser la déformation et, d'autre part, de mesurer l'élongation des fils à l'endroit de la déformation et ceci avant la rupture des fils, au moyen d'un géosynthétique équipé d'un seul jeu de fils, disposés de préférence dans le sens de la longueur de l'ouvrage.

L'invention atteint son but selon la revendication 1 par le fait que l'on applique dans l'ouvrage ou sous l'ouvrage au moins un géosynthétique équipé d'une pluralité de fibres optiques parallèles et susceptibles de transmettre des signaux, lesdites fibres optiques comportant des réseaux de Bragg, régulièrement espacés et répartis en séries de N1 réseaux consécutifs correspondant à la même longueur d'onde, lesdites séries étant elles-mêmes réparties en ensembles identiques comportant chacun N2 séries consécutives correspondant à des longueurs d'onde différentes, et par le fait que, dans au moins deux fibres optiques, les nombres N1 de réseaux dans une série et les nombres N2 de séries dans un ensemble sont déterminés de telle manière que la mesure des écarts entre les longueurs d'onde de la lumière incidente envoyée dans chacune desdites fibres optiques et les longueurs d'onde de la lumière réfléchie par les réseaux de Bragg permettent, d'une part, de localiser les déformations subies par l'ouvrage et, d'autre part, de mesurer les élongations desdites fibres optiques à l'endroit des déformations.

L'invention met ainsi en oeuvre les propriétés en soi connues des réseaux de Bragg utilisés dans des jauges de contraintes telles que celles décrites notamment dans WO 86/01303.

Les réseaux de Bragg sont espacés les uns des autres d'une distance identique dans toutes les fibres optiques, mais les longueurs des séries ou les longueurs des ensembles sont différentes sur au moins une paire de fibres optiques afin de permettre, de manière simple, les localisations des déformations de l'ouvrage par la détermination des longueurs d'onde de lumière réfléchie qui ont subi des distorsions par rapport aux longueurs d'onde correspondante de la lumière incidente, l'amplitude de ces distorsions donnant une indication de l'amplitude des élongations des fibres optiques à l'endroit des localisations.

Avantageusement, dans au moins deux fibres optiques, les nombres N1 de réseaux d'une série sont égaux et les nombres N2 de séries dans un ensemble sont premiers entre eux.

Ainsi par exemple supposons que la distance entre deux réseaux de Bragg soit de 1 mètre, que le nombre N1 est égal à 10, une série de réseaux s'étend alors sur 10 mètres. Supposons en outre que la première fibre comporte sept séries par ensemble et permet donc de traiter sept fréquences différentes, et que la deuxième fibre comporte dix séries par ensemble, les chiffres 10 et 7 étant premiers entre eux. Un ensemble de la première fibre s'étend alors sur 70 mètres, et l'ensemble de la deuxième fibre s'étend sur une longueur de 100 mètres. Ces deux fibres permettent de localiser avec certitude un ouvrage sur une longueur totale de 700 mètres. Si en outre, le géosynthétique comporte une troisième fibre optique ayant des réseaux de Bragg espacés de 1 mètre et répartis en séries de 10 réseaux de Bragg consécutifs, et chaque ensemble comporte trois séries, le chiffre 3 étant premier avec 7 et 10, les trois fibres optiques permettent alors de localiser avec certitude des déformations dans un ouvrage de 2100 mètres de longueur. La localisation de la déformation est obtenue à 10 mètres près, ce qui correspond à la longueur d'une série de 10 réseaux de Bragg. Cette précision est nettement suffisante pour la surveillance des ouvrages de génie civil.

La règle de répartition des réseaux de Bragg sur deux fibres optiques peut être évidemment différente de celle donnée ci-dessus à titre d'exemple.

Ainsi par exemple, selon une autre règle de répartition, dans au moins une fibre optique le nombre N1 de réseaux dans une série est égal au nombre de réseaux d'un ensemble dans une autre fibre optique.

Par exemple, la première fibre optique comporte un ensemble de 10 séries, et chaque série comporte 100 réseaux de Bragg identiques séparés de 1 mètre. La deuxième fibre optique comporte des ensembles de 10 séries, et chaque série comporte 10 réseaux de Bragg espacés de 1 mètre. Ces deux fibres optiques permettent de localiser avec précision une déformation d'un ouvrage ayant 1 kilomètre de long.

L'invention concerne également un géosynthétique selon la revendication 4 pour la mise en oeuvre du procédé.

Selon l'invention, ce géosynthétique est caractérisé par le fait qu'il comporte une pluralité de fibres optiques parallèles, lesdites fibres optiques comportant des réseaux de Bragg régulièrement espacés et répartis en séries de N1 réseaux consécutifs correspondant à la même longueur d'onde, lesdites séries étant elles-mêmes réparties en ensembles identiques de N2 séries consécutives correspondant à des longueurs d'ondes différentes.

Les fibres optiques sont avantageusement insérées lors de la réalisation du géosynthétique. Elles sont, de préférence, disposées dans la direction principale de la nappe, mais elles pourraient également être disposées dans le sens transversal si besoin est.

Avantageusement, les fibres optiques comportent un gainage pour leur protection contre les ruptures par cisaillement, dues aux éléments agressifs du sol, et pour leur protection contre l'influence de l'eau, de pH élevé (contact du béton) et d'autres éléments corrosifs.

De manière avantageuse, les fibres optiques sont disposées dans le sens de la longueur dudit géosynthétique.

D'autres avantages et caractéristiques de l'invention ressortiront mieux à la lecture de la description suivante faite à titre d'exemple et en référence aux dessins annexés dans lesquels :
la figure 1 représente en perspective un géosynthétique pourvu de fibres optiques comportant des réseaux de Bragg ;
la figure 2 montre une première forme de la répartition des réseaux de Bragg en ensembles identiques de séries différentes dans deux fibres optiques ; et
la figure 3 montre une deuxième forme de la répartition des réseaux de Bragg en ensembles identiques de séries différentes dans deux fibres optiques.

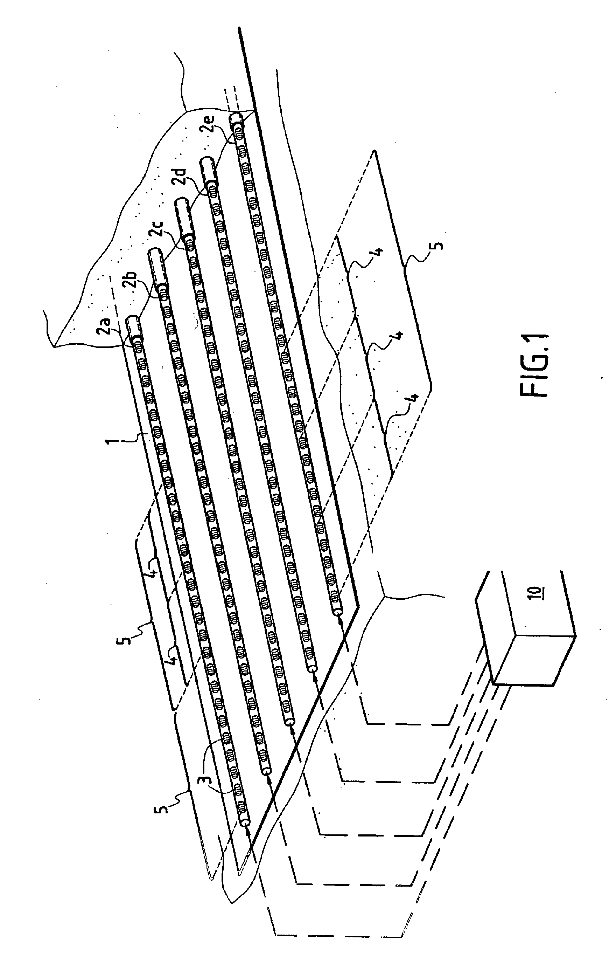

La figure 1 représente en perspective un géosynthétique 1 pourvu de fibres optiques 2a à 2e comportant des réseaux de Bragg 3 à faible réflectivité, et destiné à être utilisé pour renforcer un ouvrage de génie civil, un remblai d'autoroute ou de voie de chemin de fer par exemple.

Les réseaux de Bragg 3 sont régulièrement espacés le long des fibres optiques 2a à 2b d'une distance qui est par exemple de 1 mètre, et sont répartis en séries 4 qui comportent un nombre N1 de réseaux 3 identiques, c'est-à-dire susceptibles de réfléchir en partie une lumière incidente ayant une longueur d'onde bien déterminée en l'absence de contrainte et la longueur d'onde de la lumière réfléchie changeant de valeur en fonction de la contrainte appliquée longitudinalement sur la fibre optique correspondante. Sur l'exemple montré sur la figure 1, les séries 4 des cinq fibres optiques 2a à 2b comportent le même nombre N1 de réseaux 3 et s'étendent donc sur une longueur identique.

Plusieurs séries 4 consécutives, et correspondant à des longueurs d'onde différentes constituent un ensemble 5 de réseaux, qui est reproduit sur toute la longueur des fibres.

Au moins deux fibres optiques équipant le géosynthétique 1 comportent des ensembles 5 ayant des nombres N2 de séries différents, et on peut même réaliser un géosynthétique 1 dans lequel toutes les fibres optiques 2a à 2e comportent des ensembles 5 de réseaux de Bragg ayant des nombres N2 de série différents.

De préférence, les nombres N2 sont premiers entre eux, afin de permettre une localisation précise des déformations ultérieures du géosynthétique 1.

Les fibres optiques 2a et 2b sont disposées de préférence dans le sens de la longueur du géosynthétique 1, qui pour son transport est disposé enroulé sur un enrouleur/dérouleur de bande.

Les fibres optiques 2a à 2e sont séparées d'une distance qui est par exemple de 1 mètre. Une fois que le géosynthétique 1 est disposé à plat sur le sol, les réseaux 3 constituent alors un maillage carré. Mais ce maillage pourrait être différent d'un maillage carré, sans sortir du cadre de l'invention. Ce maillage toutefois ne doit pas être trop large, afin de permettre la détection de déformations au-dessus d'effondrements occasionnels du toit d'une cavité sous-jacente ayant une faible section dans des plans horizontaux.

Le géosynthétique 1 a habituellement une largeur voisine de 5,5 mètres, et si l'ouvrage de génie civil à renforcer a une largeur supérieure à celle du géosynthétique 1, on dispose plusieurs bandes de géosynthétique côte à côte. Ces bandes peuvent également être superposées dans l'ouvrage à renforcer.

Pour éviter la rupture par cisaillement des fibres optiques 2a à 2b, rupture due par exemple aux éléments agressifs du sol, et pour les protéger contre l'influence de l'eau, les pH élevés et autres éléments corrosifs, les fibres optiques 2a à 2e sont disposées dans un gainage de protection approprié.

Les fibres optiques 2a à 2b sont raccordées à l'une des extrémités du géosynthétique à un système de contrôle 10 qui comportent des moyens pour envoyer de la lumière dans le coeur des fibres optiques 2a à 2e, des moyens pour mesurer les fréquences des lumières réfléchies par les réseaux de Bragg 3,
des moyens pour mesurer les écarts entre les longueurs d'onde de la lumière réfléchie en cours d'exploitation et les longueurs d'onde de la lumière réfléchie, en l'absence de contrainte, c'est-à-dire lors de la construction de l'ouvrage,
des moyens de calcul pour indiquer la localisation des déformations éventuelles et les élongations des fibres optiques dues aux déformations de l'ouvrage, des moyens de stockage de données, des moyens de visualisation des résultats, et éventuellement des moyens avertisseurs pour donner l'alarme.

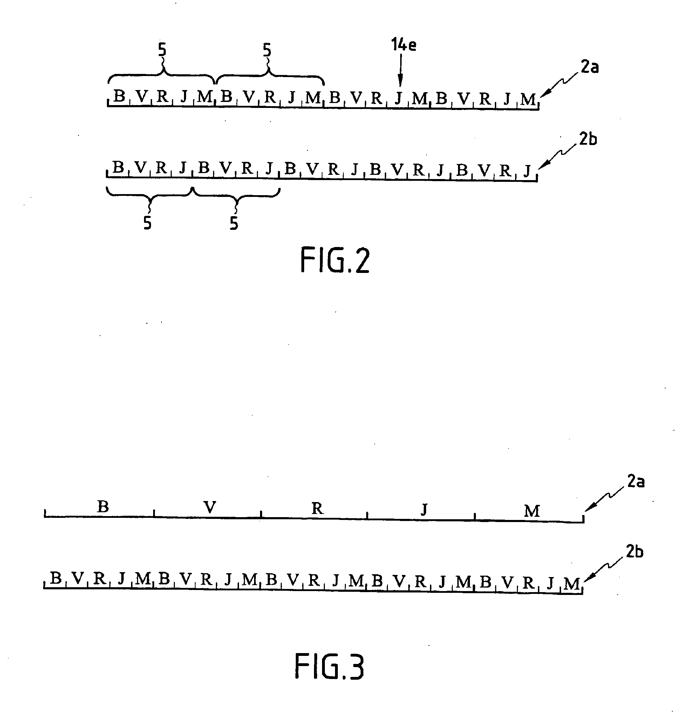

Sur les figures 2 et 3, on a désigné par les références B, V, R, J, M, les séries 4 de réseaux correspondant à des longueurs d'onde prédéterminés et différents.

Sur la figure 2, la fibre optique 2a comporte des ensembles 5 contenant cinq séries référencées B, V, R, J, M et la fibre optique 2b comporte des ensembles 5 comportant quatre séries référencées B, V, R, J.

On constate que sur une longueur de géosynthétique correspondant à vingt séries 4 de réseaux 3, une déformation située au niveau d'une série, la quatorzième série en partant de la gauche par exemple, sera reconnue par le système de contrôle 10 par le fait que la longueur d'onde référencée J sur la fibre optique 2a aura subi un décalage et la longueur d'onde référencée V sur la fibre optique 2b aura subi un décalage, et chaque combinaison de deux longueurs d'onde correspond a une position de série précise.

Sur la figure 3, la fibre optique 2b comporte, par ensemble, cinq séries référencées B, V, R, J et M et la fibre optique 2a comporte, par exemple, cinq séries référencées B, V, R, J et M, mais la longueur de chaque série de la fibre optique 2a est égal à la longueur d'un ensemble de la fibre optique 2b.

Ici aussi chaque position d'une série de la fibre optique 2b, en partant de la gauche de la figure 3, est reconnue de façon certaine par la longueur d'onde correspondant à cette série sur la fibre optique 2b et la longueur d'onde de la série adjacente sur la fibre optique 2a, et ceci sur une longueur de géosynthétique correspondant à vingt cinq séries de la fibre optique 2b, et à un ensemble de la fibre optique 2a.

L'organe de contrôle 10 permet de localiser et mesurer les contraintes locales subies par les fibres optiques 2a à 2c par suite des déformations ultérieures de l'ouvrage au cours de son exploitation, par lecture directe des longueurs d'onde de la lumière réfléchie par les réseaux de Bragg 3 dans la plage des déformations comprises entre 0 et 3 ou 4 %, et de situer le niveau de déformation dans la plage comprise entre 3 ou 4 % et la rupture d'une fibre optique qui se situe à un niveau de déformation voisin de 8 % ou plus, suivant la fibre utilisée.

Après l'installation du géosynthétique 1 et la construction de l'ouvrage ou de la structure sus-jacente, une mesure initiale permet de définir l'état de référence du système. La localisation de chaque réseau d'une fibre optique est obtenue en identifiant les longueurs d'onde des réseaux 3 de toutes les fibres optiques 2a et 2b alignés dans le sens de la largeur du géosynthétique 1.

Dans le cas d'une déformation survenant postérieurement à la construction, les longueurs d'onde de la lumière réfléchie par les réseaux de Bragg 3 situés à l'endroit de la déformation sont modifiées, alors que les longueurs d'onde des autres réseaux de Bragg restent inchangées. On obtient donc la localisation et la mesure de la déformation.

## Revendications

1. Procédé pour localiser et mesurer les déformations d'un ouvrage de génie civil, selon lequel on applique dans ledit ouvrage ou sous ledit ouvrage au moins un géosynthétique (1) équipé d'une pluralité de fibres optiques (2a à 2e) parallèles et susceptibles de transmettre des signaux, **caractérisé par le fait que**
lesdites fibres optiques comportent des réseaux de Bragg (3), espacés les uns des autres d'une distance identique et répartis en séries (4) de N1 réseaux consécutifs correspondant à la même longueur d'onde, lesdites séries sont elles- mêmes réparties en ensembles identiques comportant chacun N2 séries consécutives correspondant à des longueurs d'onde différentes, et **par le fait que**, dans au moins deux fibres optiques, les longueurs des séries ou les longueurs des ensembles sont différentes et les nombres N1 de réseaux d'une série et les nombres N2 de séries (4) d'un ensemble (5) sont déterminés de telle manière que la mesure des écarts entre les longueurs d'onde de la lumière incidente envoyée dans chacune desdites fibres optiques et les longueurs d'onde de la lumière réfléchie par les réseaux de Bragg permettent, d'une part, de localiser les déformations subies par l'ouvrage et, d'autre part, de mesurer les élongations desdites fibres optiques à l'endroit des déformations.

2. Procédé selon la revendication 1, **caractérisé par le fait que** dans au moins deux fibres optiques, les nombres N1 de réseaux d'une série (4) sont égaux, et les nombres N2 de séries (4) d'un ensemble (5) sont premiers entre eux.

3. Procédé selon la revendication 1, **caractérisé par le fait que** dans au moins une fibre optique, le nombre N1 de réseaux dans une série est égal au nombre de réseaux d'un ensemble dans une autre fibre optique.

4. Géosynthétique pour la mise en oeuvre du procédé selon l'une quelconque des revendications 1 à 3, **caractérisé par le fait qu'**il comporte une pluralité de fibres optiques (2a à 2e) parallèles, lesdites fibres optiques comportant des réseaux de Bragg (3), régulièrement espacés et répartis en séries (4) de N1 réseaux consécutifs correspondant à la même longueur d'onde, lesdites séries (4) étant elles-mêmes réparties en ensembles (5) identiques de N2 séries consécutives correspondant à des longueurs d'ondes différentes,
et un système de contrôle (10) qui comporte des moyens pour envoyer de la lumière dans le coeur des fibres optiques (2a à 2e), des moyens pour mesurer les fréquences et les écarts entre les longueurs d'onde des lumières réfléchies par les réseaux de Bragg (3), ainsi que de moyens de calcul pour indiquer la localisation des déformations subies par l'ouvrage et mesurer les élongations desdites fibres optiques à l'endroit des déformations.

5. Géosynthétique selon la revendication 4, **caractérisé par le fait que** les fibres optiques (2a à 2e) comportent un gainage pour leur protection contre les ruptures par cisaillement, dues aux éléments agressifs du sol, et contre la corrosion.

6. Géosynthétique selon l'une des revendications 4 ou 5, **caractérisé par le fait que** les fibres optiques (2a à 2e) sont disposées dans le sens de la longueur dudit géosynthétique.

7. Géosynthétique selon l'une quelconque des revendications 4 à 6, **caractérisé par le fait que** les fibres optiques sont insérées dans ledit géosynthétique lors de la réalisation de ce dernier.

## Patentansprüche

1. Verfahren zum Lokalisieren und Messen der Verformungen eines Bauwerks, wonach in dem Bauwerk oder unter dem Bauwerk wenigstens ein geosynthetisches Produkt (1) angelegt wird, welches mit einer Vielzahl von Lichtwellenleitern (2a bis 2e), die parallel verlaufen und geeignet sind, Signale zu übertragen, ausgerüstet ist, **dadurch gekennzeichnet, dass**
die Lichtwellenleiter Bragg-Gitter (3) umfassen, die um einen gleichen Abstand voneinander beabstandet sind und die in Reihen (4) von N1 aufeinanderfolgenden Gittern, welche der gleichen Wellenlänge entsprechen, aufgeteilt sind, die Reihen selbst in identische Einheiten, die jeweils N2 aufeinanderfolgende Reihen, welche unterschiedlichen Wellenlängen entsprechen, umfassen, aufgeteilt sind, und dadurch, dass bei wenigstens zwei Lichtwellenleitern die Längen der Reihen oder die Längen der Einheiten unterschiedlich sind und die Anzahlen N1 von Gittern einer Reihe und die Anzahlen N2 von Reihen (4) einer Einheit (5) derart festgelegt sind, dass die Messung der Abstände zwischen den Wellenlängen des einfallenden Lichts, das in jeden der Lichtwellenleiter gesendet wird, und den Wellenlängen des durch die Bragg-Gitter reflektierten Lichts einerseits ermöglicht, die Verformungen, die das Bauwerk erfahren hat, zu lokalisieren, sowie andererseits die Dehnungen der Lichtwellenleiter an der Stelle der Verformungen zu messen.

2. Verfahren nach Anspruch 1, **dadurch gekennzeichnet, dass** bei wenigstens zwei Lichtwellenleitern die Anzahlen N1 von Gittern einer Reihe (4) gleich sind und die Anzahlen N2 von Reihen (4) einer Einheit (5) teilerfremd sind.

3. Verfahren nach Anspruch 1, **dadurch gekennzeichnet, dass** bei wenigstens einem Lichtwellenleiter die Anzahl N1 von Gittern in einer Reihe gleich der Anzahl von Gittern einer Einheit bei einem anderen Lichtwellenleiter ist.

4. Geosynthetisches Produkt für die Durchführung des Verfahrens nach einem der Ansprüche 1 bis 3, **dadurch gekennzeichnet, dass** es eine Vielzahl von parallelen Lichtwellenleitern (2a bis 2e), wobei die Lichtwellenleiter Bragg-Gitter (3) umfassen, die gleichmäßig beabstandet und in Reihen (4) von N1 aufeinanderfolgenden Gittern, welche der gleichen Wellenlänge entsprechen, aufgeteilt sind, wobei die Reihen (4) selbst in identische Einheiten (5) von N2 aufeinanderfolgenden Reihen, die unterschiedlichen Wellenlängen entsprechen, aufgeteilt sind, sowie ein Steuersystem (10) umfasst, das Mittel zum Aussenden von Licht in den Kern der Lichtwellenleiter (2a bis 2e), Mittel zum Messen der Frequenzen und der Abstände zwischen den Wellenlängen der durch die Bragg-Gitter (3) reflektierten Lichter sowie Rechenmittel umfasst, um die Lokalisierung der Verformungen, die das Bauwerk erfahren hat, anzuzeigen und um die Dehnungen der Lichtwellenleiter an der Stelle der Verformungen zu messen.

5. Geosynthetisches Produkt nach Anspruch 4, **dadurch gekennzeichnet, dass** die Lichtwellenleiter (2a bis 2e) einen Mantel für ihren Schutz gegen Scherbrüche, die durch die aggressiven Elemente des Bodens bedingt sind, und gegen Korrosion umfassen.

6. Geosynthetisches Produkt nach einem der Ansprüche 4 oder 5, **dadurch gekennzeichnet, dass** die Lichtwellenleiter (2a bis 2e) in der Längsrichtung des geosynthetischen Produkts angeordnet sind.

7. Geosynthetisches Produkt nach einem der Ansprüche 4 bis 6, **dadurch gekennzeichnet, dass** die Lichtwellenleiter in das geosynthetische Produkt bei dessen Herstellung eingefügt werden.

## Claims

1. A process for locating and measuring deformations in a civil engineering structure, wherein at least one geosynthetic fabric (1) containing a plurality of optical fibres (2a to 2e) in parallel and capable of transmitting signals is applied in the said structure or under the said structure, the process being **characterized by** the fact that
the said optical fibres contain Bragg gratings (3), placed at equal distance of each other in series (4) of N1 consecutive gratings that correspond to the same wavelength, the said series are themselves distributed in identical sets, each of which contains N2 consecutive series that correspond to different wavelengths, and by the fact that, in at least two optical fibres, the lengths of the series or the lengths of the sets are different and the numbers N1 of gratings of a series and the numbers N2 of series (4) of a set (5) are determined in such a way that the measurement of differences between the wavelengths of the incident light transmitted in each of the said optical fibres and the wavelengths of the light reflected by the Bragg gratings enable to locate the deformations to which the structure is subjected on the one hand and, on the other, to measure the elongation of the said optical fibres where the deformation occurs.

2. A process according to claim 1, **characterised by** the fact that in at least two optical fibres, the numbers N1 of gratings of a series (4) are equal, and the numbers N2 of series (4) of a set (5) are prime to each other.

3. A process according to claim 1, **characterised by** the fact that in at least one optical fibre, the number N1 of gratings in a series is equal to the number of gratings of a set in another optical fibre.

4. A geosynthetic fabric for the application of the process according to any one of claims 1 to 3, **characterised by** the fact that it contains a plurality of optical fibres (2a to 2e) in parallel, the said optical fibres containing Bragg gratings (3), evenly spaced in series (4) of N1 consecutive gratings that correspond to the same wavelength, the said series (4) being themselves distributed in identical sets (5) of N2 consecutive series that correspond to different wavelengths, and a control system (10) which includes means for transmitting light in the core of the optical fibres (2a to 2e), means for measuring the frequencies and the differences between the wavelengths of light reflected by the Bragg gratings (3), as well as calculation means for indicating the location of the deformations to which the structure is subjected and for measuring the elongation of the said optical fibres where the deformation occurs.

5. A geosynthetic fabric according to claim 4, **characterised by** the fact that the optical fibres (2a to 2e) include a sheath to protect them against shear failure, due to aggressive agents in the soil, and against corrosion.

6. A geosynthetic fabric according to either one of claims 4 and 5, **characterised by** the fact that the optical fibres (2a to 2e) are laid in the direction of the length of the said geosynthetic fabric.

7. A geosynthetic fabric according to any one of claims 4 to 6, **characterised by** the fact that the optical fibres are inserted in the said geosynthetic fabric during its manufacture.
